(19) **Europäisches Patentamt / European Patent Office / Office européen des brevets**

(11) **EP 1 885 761 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(21) Anmeldenummer: **06755214.1**

(22) Anmeldetag: **16.05.2006**

(51) Int Cl.:
**C08F 265/04** (2006.01)  **C08F 257/02** (2006.01)
**C09D 151/00** (2006.01)  **C08K 5/00** (2006.01)
**C08K 3/00** (2006.01)  **C08F 2/22** (2006.01)

(86) Internationale Anmeldenummer:
**PCT/EP2006/062350**

(87) Internationale Veröffentlichungsnummer:
**WO 2006/122937 (23.11.2006 Gazette 2006/47)**

(54) **FARBIGES POLYMERSYSTEM MIT VERBESSERTER FARBBRILLIANZ**

COLOURED POLYMER SYSTEM WITH IMPROVED COLOUR BRILLIANCE

SYSTÈME POLYMÈRES COLORÉ À BRILLANCE AMÉLIORÉE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.05.2005 DE 102005023806**

(43) Veröffentlichungstag der Anmeldung:
**13.02.2008 Patentblatt 2008/07**

(73) Patentinhaber: **BASF SE**
**67056 Ludwigshafen (DE)**

(72) Erfinder:
• **LEYRER, Reinhold J**
**67125 Dannstadt-Schauernheim (DE)**
• **ALTMANN, Stephan**
**67146 Deidesheim (DE)**
• **ELIZALDE, Oihana**
**68159 Mannheim (DE)**

(56) Entgegenhaltungen:
**EP-A- 1 086 966**   **EP-A- 1 087 000**
**US-A1- 2003 215 604**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Verbesserung der Farbbrillianz eines farbigen Polymersystems, welches aus einer Matrix und diskreten Polymerteilchen, welche gemäß einer definierten Raumgitterstruktur in der Matrix verteilt sind, besteht und durch Verfilmung eines Emulsionspolymerisats mit Kern/schale Aufbau erhalten wird, wobei das Emulsionspolymerisat erhältlich ist durch Polymerisation von Monomeren in mindestens einer ersten Stufe (Monomere des Kerns) und anschließende Polymerisation von Monomeren in mindestens einer weiteren, zweiten Stufe (Monomere der Schale) wobei das Gewichtsverhältnis der Monomeren des Kerns zu den Monomeren der Schale 1 : 0,05 bis 1 : 20 beträgt, und wobei die Glasübergangstemperatur des Gewisches der Monomeren der Schale mindestens 10°C tiefer ist als die Glastemperatur des Gemischs der Monomeren des Kerns, dadurch gekennzeichnet, dass die Polymerisation der Monomeren des Kerns in Gegenwart eines Absorbers für elektromagnetische Wellen, insbesondere einen UV-Absorbers erfolgt.

Weiterhin betrifft die Erfindung farbige Polymersysteme, die nach diesem Verfahren erhältlich sind und die Verwendung der farbigen Polymersysteme zur Beschichtung z.B. von Kunststoffen, Papier oder in optischen Anzeigen.

Aus DE-19717879, DE-19820302 und DE-19834194 und DE-A-10321083 sind farbige Polymersysteme bekannt, bei denen diskrete Polymerteilchen in einer Matrix dispergiert sind.

In DE 10229732 (PF 53679) ist die Verwendung derartiger Polymerschichten in optischen Anzeigeelementen beschrieben.

Aufgabe der vorliegenden Erfindung war die Verbesserung der Farbbrillianz der farbigen Polymersysteme bzw. der daraus hergestellten farbigen Polymerfilme. Die Polymerfilme sollen weiterhin möglichst widerstandsfähig gegen mechanische Beanspruchungen sein, wie sie z.B. bei der Verwendung der Polymerfilme in Displays auftreten können. Demgemäss wurde das eingangs beschriebene Verfahren gefunden.

Die farbigen Polymersysteme bestehen im wesentlichen aus einer Matrix und diskreten Polymerteilchen, welche gemäß einer definierten Raumgitterstruktur in der Matrix verteilt sind.

Die Verwendung von Emulsionspolymerisaten mit Kern/Schale Aufbau zur Herstellung von derartigen farbigen Polymersystemen ist bereits im Stand der Technik beschrieben (siehe DE-A-19820302, DE-A- 19834194).

Das farbige Polymersystem wird durch Verfilmung eines Emulsionspolymerisats mit Kern/Schale Aufbau erhalten.

Die Schale des Emulsionspolymerisats ist verfilmbar und bildet die Matrix aus, während die Kerne des Emulsionspolymerists als diskrete Polymerteilchen in der Matrix verteilt sind.

Das Emulsionspolymerisat wird entsprechend durch eine mehrstufige EmulsionsPolymerisation erhalten, wobei

zunächst in mindestens einer 1. Stufe die Monomeren polymerisiert werden, die den Kern ausbilden und

danach in mindestens einer 2.Stufe die Monomeren polymerisiert werden, die die verfilmbare Schale ausbilden.

Die Monomerzusammensetzung des Kerns unterscheidet sich von der der Schale.

Das Monomerengemisch der 1. Stufe (Kern) hat vorzugsweise eine nach der Fox-Gleichung berechnete Glasübergangstemperatur (Tg) von 0 bis 150, besonders bevorzugt von 0 bis 120 °C, ganz besonders bevorzugt von 0 bis 110 °C.

Die noch nach Fox berechnete Tg des Monomerengemisches der 2. Stufe (Schale) beträgt vorzugsweise -50 bis 110 °C, besonders bevorzugt -40 bis 25 °C. Die Tg des Monomerengemisches der 2. Stufe ist mindestens 10 °C tiefer, bevorzugt mindestens 20 °C tiefer als die Tg des Monomerengemisches der 1. Stufe.

Ein wesentliches Merkmal der vorliegenden Erfindung ist, dass die Polymerisation der Monomeren der 1. Stufe in Gegenwart eines Absorbers für elektromagnetische Wellen, insbesondere eines UV-Absorbers durchgeführt wird. Entsprechend enthält das Polymer einen derartigen Absorber, insbesondere UV Absorber.

Die Polymerisation der 1. Stufe (Kern) wird in Gegenwart des Absorbers durchgeführt.

Als UV- Absorber in Betracht kommen, z. B. Hydroxybenzophenone oder Hydroxyphenylbenzotriazole.

Derartige UV Absorber sind z. B. unter dem Handelsnamen Uvinul ® 3033P bekannt.

Die Menge der Absorber beträgt insbesondere 0,1 bis 5 Gew. %, besonders bevorzugt 0,2 bis 3 Gew. %, bezogen auf das gesamte Polymer. Die gesamte Menge wird bei der Polymerisation der 1. Stufe eingesetzt.

Eine bevorzugte Ausführungsform der vorliegenden Erfindung ist, dass das Monomerengemisch der 1. Stufe auch Monomere mit einer Tg kleiner 0 °C, vorzugsweise kleiner -20 °C, besonders bevorzugt kleiner -30 °C enthält.

Der Anteil dieser Monomeren an allen Monomeren der 1. Stufe beträgt mindestens 5 Gew. %, vorzugsweise mindestens 10 Gew. %, besonders bevorzugt mindestens 20 Gew.%, insbesondere mindestens 30 oder 40 Gew.%. Die übrigen Monomeren der 1. Stufe werden so gewählt, dass der obige Tg Bereich der 1. Stufe erfüllt ist.

Bevorzugte Monomere mit tiefer Tg sind Alkyl(meth)acrylate, insbesondere n-Butylacrylat und 2-Ethylhexylacrylat. Bei den übrigen Monomeren handelt es sich insbesondere um Styrol, vernetzende Monomere und ggb. Hilfsmonomere wie Acrylsäure, Methacrylsäure

Aus dem Stand der Technik ist bekannt, dass der Kern ist vernetzt ist, während die Schale unvernetzt ist.

Im Rahmen der vorliegenden Erfindung ist bevorzugt, dass auch die Monomeren der 2. Stufe (Schale) vernetzende Monomere enthalten.

Vernetzende Monomere sind insbesondere Monomere mit zwei polymerisierbaren Gruppen z.B. mit zwei Vinylgruppe oder Allylgruppen. Gebannt seien Divinylbenzol, Alkandioldiacrylate oder Diallylphthalat

Der Anteil der vernetzenden Monomere in dem Monomerengemisch der 1. Stufe beträgt vorzugsweise 0,5 bis 25 besonders bevorzugt 1 bis 7 Gew.-%, ganz besonders bevorzugt 2 bis 6 Gew.%, bezogen auf die Monomeren der 1. Stufe.

Der Anteil der vernetzenden Monomere in dem Monomerengemisch der 2. Stufe beträgt vorzugsweise 0,01 bis 10, besonders bevorzugt 0,1 bis 5 Gew.-%, ganz besonders bevorzugt 0,1 bis 3 Gew.%, bezogen auf die Monomeren der 2. Stufe.

Die Gewichtsmenge der vernetzenden Monomeren der 1. Stufe ist vorzugsweise mindestens doppelt so hoch wie die Gewichtsmenge der vernetzenden Monomere der 2. Stufe.

Im Rahmen der vorliegenden Erfindung ist es weiterhin bevorzugt, dass die Polymerisation der Monomeren der 1. und/oder der 2. Stufe in Gegenwart unterschiedlicher Emulgatoren durchgeführt wird. Wenn bei der Polymerisation der Monomeren des Kerns Emulgatoren mit einer ionischen Gruppe (ionische Emulgatoren) verwendet werden, dann werden bei der Polymerisation der Monomeren der Schale vorzugsweise Emulgatoren ohne ionische Gruppen (nichtionische Emulgatoren) verwendet. Umgekehrt werden bei der Polymerisation der Monomeren der Schale ionische Emulgatoren verwendet, wenn die Polymerisation der Monomeren des Kerns in Gegenwart von nicht- ionischen Emulgatoren durchgeführt wurde.

Für die Art der Emulgatoren und die Menge gelten die nachstehenden Ausführungen.

In einer bevorzugten Ausführungsform für die Herstellung des Emulsionspolymerisats werden die Monomeren der Schale bei der Polymerisation in weniger als 90 Minuten, besonders bevorzugt in weniger als 60 Minuten und insbesondere in weniger als 30 Minuten zudosiert. Ganz besonders bevorzugt erfolgt die Polymerisation der Monomeren der Schale in batch - Fahrweise, d.h. alle Monomeren der Schale werden dem Polymerisationsgefäß möglichst zeitgleich, im allgemeinen innerhalb weniger Minuten, z. B. maximal 10 oder maximal 5 Minuten, zugeführt und anschließend polymerisiert.

Vor Beginn der Zugabe der Monomeren der Schale sind vorzugsweise bereits mehr als 90 Gew. % der gesamten für die Emulsionspolymerisation verwendeten Initiatormenge zugegeben worden, besonders bevorzugt ist vor Beginn der Zugabe der Monomeren der Schale bereits die gesamte für die Emulsionspolymerisation verwendeten Initiatormenge

Allgemeine Ausführungen zum Kern/Schale Polymerisat:

Das Gewichtsverhältnis der Monomeren, welche den nicht verfilmenden Kern ausbilden, zu den Monomeren, die die verfilmende Schale ausbilden beträgt 1:0,05 bis 1:20, bevorzugt 1:0,2 bis 1:5.

Besonders bevorzugt gilt für den Anteil der Stufen an gesamten Polymerisat folgendes:

1. Stufe (Kern) 10 - 90 Gew.-%, besonders bevorzugt 40 -60 Gew.-%.

2. Stufe (Schale) 10 bis 90 Gew.-%, besonders bevorzugt 40 - 60 Gew.-%.

Insgesamt besteht das Emulsionspolymerisat vorzugsweise zu mindestens 40 Gew.-%, bevorzugt zu mindestens 60 Gew.-%, besonders bevorzugt zu mindestens 80 Gew.-% aus sogenannten Hauptmonomeren.

Die Hauptmonomeren sind ausgewählt aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, a- und p-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Butadien, Isopren und Chloropren genannt, mit einer Doppelbindung z.B. Ethylen oder Propylen.

Als Hauptmonomere bevorzugt sind die $C_1$- bis $C_{20}$-Alkylacrylate und -methacrylate, insbesondere $C_1$- bis $C_8$-Alkylacrylate und -methacrylate, Vinylaromaten, insbesondere Styrol, und deren Mischungen, insbesondere auch Mischungen der Alkyl(meth)acrylate und Vinylaromaten.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Die Herstellung des Emulsionspolymerisats erfolgt durch Emulsionspolymerisation. Bei der Emulsionspolymerisation werden ionische und/oder nicht-ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen Emulgatoren eingesetzt, deren Molekulargewicht im Unterschied zu den Schutzkolloiden üblicherweise unter 2000 g/mol liegen.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können, unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(11)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Monomeren des Monomerengemisches der 1. oder 2. Stufe werden vorzugsweise zu mindestens 90 Gew.-%, besonders bevorzugt zu mindestens, 95 Gew.-% und ganz besonders bevorzugt zu mindestens 99 Gew.-% auspolymerisiert, bevor mit der Zugabe der Monomeren der nächsten Stufe begonnen wird.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Eine einheitliche Teilchengrößenverteilung, d.h. ein geringer Polydispersitätsindex ist durch den Fachmann bekannte Maßnahmen erhältlich, z.B. durch Variation der Menge der grenzflächenaktiven Verbindung (Emulgator oder Schutzkolloide) und/oder entsprechende Rührergeschwindigkeiten.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Das Emulsionspolymerisat kann in üblicher Weise unter Entfernung des Wassers verfilmt werden, wodurch sich das farbige Polymersystem ausbildet.

Die Polymerteilchen des farbigen Polymersystems und die Matrix unterscheiden sich vorzugsweise in ihrem Brechungsindex. Der Unterschied in Brechungsindex beträgt vorzugsweise mindestens 0,01, insbesondere 0,1.

Das Polymersystem verursacht einen optischen Effekt, das heißt eine zu beobachtende Reflexion durch Interferenz des an den Polymerteilchen gestreuten Lichts.

Die Wellenlänge der Reflexion kann dabei je nach Abstand der Polymerteilchen im gesamten elektromagnetischen Spektrum liegen. Vorzugsweise liegt die Wellenlänge im UV-Bereich, IR-Bereich und insbesondere im Bereich des sichtbaren Lichts.

Die Wellenlänge der zu beobachtenden Reflexion hängt dabei nach der bekannten Bragg-Gleichung von dem Netzebenenabstand, hier der Abstand zwischen den in einer Raumgitterstruktur in der Matrix angeordneten Polymerteilchen, ab.

Damit sich die gewünschte Raumgitterstruktur mit dem gewünschten Abstand zwischen den Polymerteilchen einstellt, ist insbesondere der Gewichtsanteil der Matrix entsprechend zu wählen. Bei den vorstehend beschriebenen Herstellmethoden sollten die organischen Verbindungen, z.B. polymere Verbindungen in entsprechender Menge eingesetzt werden.

Der Gewichtsanteil der Matrix, d.h. der Anteil der verfilmenden Schale wird insbesondere so bemessen, dass eine Raumgitterstruktur der Polymerteilchen entsteht, welche elektromagnetische Strahlung im gewünschten Bereich reflektiert.

Der Abstand zwischen den Polymerteilchen (jeweils bis zum Mittelpunkt der Teilchen) beträgt geeigneterweise 20 bis 50 000 nm, vorzugsweise 100 bis 400 nm, wenn ein Farbeffekt, d.h. eine Reflexion im Bereich des sichtbaren Lichts gewünscht ist.

Zur Ausbildung einer definierten Raumgitterstruktur sollen die diskreten Polymerteilchen vorzugsweise möglichst gleich groß sein. Ein Maß für die Einheitlichkeit der Polymerteilchen ist der sogenannte Polydispersitätsindex, berechnet nach der Formel

$$P.I. = (D_{90} - D_{10})/D_{50}$$

worin $D_{90}$, $D_{10}$ und $D_{50}$ Teilchendurchmesser bezeichnen, für die gilt:

$D_{90}$:  90 Gew.-% der Gesamtmasse aller Teilchen hat einen Teilchendurchmesser kleiner oder gleich $D_{90}$
$D_{50}$:  50 Gew.-% der Gesamtmasse aller Teilchen hat einen Teilchendurchmesser kleiner oder gleich $D_{50}$
$D_{10}$:  10 Gew.-% der Gesamtmasse aller Teilchen hat einen Teilchendurchmesser kleiner oder gleich $D_{10}$

Weitere Erläuterungen zum Polydispersitätsindex finden sich z.B. in DE-A 99717879 (insbesondere Zeichnungen Seite 1).

Die Teilchengrößenverteilung kann in an sich bekannter Weise, z.B. mit einer analytischen Ultrazentrifuge (W. Mächtle, Makromolekulare Chemie 185 (1984) Seite 1025-1039) oder mit der Methode der dynamischen Chromatographie bestimmt werden und daraus der $D_{10}$, $D_{50}$ und $D_{90}$-Wert entnommen und der Polydispersitätsindex bestimmt werden.

Alternativ kann die Teilchengröße und Teilchengrößenverteilung auch durch Messung der Lichtstreuung mit kommerziellen Geräten (z.B. Autosizer 2C der Firma Malvern, England) bestimmt werden.

Die Polymerteilchen haben bevorzugt einen $D_{50}$-Wert im Bereich um 0,05 bis 5 $\mu$m. Es kann sich bei den Polymerteilchen um eine Teilchensorte oder mehrere Teilchensorten mit unterschiedlichem $D_{50}$-Wert handeln, wobei jede Teilchensorte einen Polydispersitätsindex bevorzugt kleiner 0,6, besonders bevorzugt kleiner 0,4 und ganz besonders bevorzugt kleiner 0,3 und insbesondere kleiner 0,15 hat.

Insbesondere bestehen die Polymerteilchen nun aus einer einzigen Teilchensorte. Der $D_{50}$-Wert liegt dann vorzugsweise zwischen 0,05 und 20 $\mu$m, besonders bevorzugt liegt er zwischen 100 und 400 Nanometer.

Die vorstehenden Ausführungen über die Teilchengröße und Teilchengrößenverteilung der diskreten Polymerteilchen gelten auch für das Emulsionspolymerisat selbst.

Auf das farbige Polymersystem kann eine transparente Polymerschicht aufgebracht werden, um die Farbbrillanz und die Stabilität des farbigen Polymersystems zu verbessern, wie in DE-A-10321084 beschrieben ist oder es kann eine Erwärmung durchgeführt werden wie in DE-A-10321079 beschrieben ist.

Die nach dem erfindungsgemäßen Verfahren erhaltenen oder erhältlichen farbigen Polymersysteme haben eine verbesserte Farbbrillianz, Elastizität und Stabilität.

Die farbigen Polymersysteme eignen sich als oder in Beschichtungsmitteln, z. B. zur Beschichtung von Kunststoffen, Kunststofffolien, faserigen Systemen, wie Textilien oder Papier, Verpackungen etc oder in optischen Anzeigen mit sich ändernder Farbe der Polymerschicht oder zur Erhöhung der Lichtausbeute in optischen Anzeigen oder zur Herstellung von Farbpigmenten oder zur Herstellung von Formkörpern, welche z.B. durch Extrusion hergestellt werden können und für verschiedenste Zwecke, für die farbige Formkörper gewünscht sind, z. B. im Automobilbau oder Haushalt eingesetzt werden können. Sie eignen sich auch für feste Zubereitungen, insbesondere solche wie sie in EP-A-955323 beschrieben sind oder Formkörper, wie sie in DE-A-10228228 beschrieben sind

Gegenstand der Erfindung ist auch ein Verfahren zur Herstellung von mit einem farbigen Polymersystem beschichteten Substraten, dadurch gekennzeichnet, dass das Polymersystem auf einen temporären Träger aufgebracht wird, z. B. durch Verfilmung eines wässrigen Polymersystems oder durch Extrusion, und der erhaltene beschichtete Träger dann mit der beschichteten Seite auf das Substrat transferiert wird, z. B. laminiert oder gepresst wird, und gegebenenfalls der temporäre Träger anschließend abgezogen wird. Der beschichtete Träger kann durch übliche Verfahren, z. B. Verfilmung einer wässrigen Polymerdispersion oder durch Extrusion oder Aufpressen eines festen Polymersystems hergestellt werden. Das anschließende Laminieren des beschichteten Trägers auf das Substrat kann durch Druck oder erhöhte Temperatur unterstützt werden. Auch hier sind die üblichen Verfahren möglich. Insbesondere kann der beschichtete Träger vorher gespannt werden, z.B. durch Ziehen, und in dieser gespannten Form auf das Substrat gebracht werden. Durch eine anschließende Wärmebehandlung können Blasenbildung und Fehlstellen vermieden werden.

Beispiele für die Anwendung des Patents

Alle Synthesen wurden in einem 2000-ml-Vierhalskolben durchgeführt, der mit einem Rückflusskühler, einem Stickstoffeintrittsrohr, Eintrittsrohren für die Beschickung mit der Monomeremulsion und der Initiatorlösung und einem Ankerrührer mit einer Drehzahl von 150 pro Minute versehen war.

Vergleichsbeispiel

In einem Reaktor mit Ankerrührer, Thermometer, Gaseintrittsrohr, Beschickungsrohren und Rückflusskühler wurden zunächst 397,28 g Wasser vorgelegt, dann wurden 1,42 g Polystyrenkeimpartikeldispersion mit einer Teilchengröße von 30 nm und einem Feststoffgehalt von 33 Masse-% zugegeben. Der Kolbeninhalt wurde anschließend erhitzt und bei einer Drehzahl von 150 $min^{-1}$ gerührt. Während dieser Zeit wurde dem Reaktor Stickstoff zugeführt. Bei Erreichen einer Temperatur von 75°C wurde die Stickstoffzufuhr eingestellt und vermieden, dass Luft in den Reaktor gelangte. Vor der Polymerisation wurden dem Reaktor 20 % einer Natriumperoxodisulfatlösung aus 3,5 g Natriumpersulfat in 50 g Wasser zugeführt und 5 Minuten lang voroxidiert, dann wurde der Rest Natriumpersulfatlösung innerhalb von 4,5 Stunden zugesetzt. Zeitgleich wurde 2 Stunden lang Monomeremulsion a) des Kerns zudosiert, anschließend 30 Minuten nachpolymerisiert und schließlich Monomeremulsion b) der Schale-über 2 Stunden zudosiert. Nach 1,5 Stunden während des Zulaufs der Monomeremulsion b) wurde Zulauf 4 zur Monomeremulsion b) hinzugegeben. Nach Beendigung der Monomerzugabe ließ man die Dispersion eine Stunde nachpolymerisieren. Anschließend erfolgte die Abkühlung auf Zimmertemperatur.

Die Zusammensetzung der Zuläufe war wie folgt:

Zulauf 1: Monomeremulsion a)

| | |
|---|---|
| 116,67 g | Wasser |
| 8,75 g | Texapon NSO, Massekonz.: 28 % in Wasser |
| 0,7 g | Natronlauge, Massekonz.: 25 % in Wasser |
| 14,0 g | Acrylsäure |
| 14,00 g | Diallylphthalat |
| 168,0 g | Styrol |
| 168,00 g | n-Butylacrylat |
| 7,00 g | Spülwasser |

Zulauf 2: Initiatorlösung

| | |
|---|---|
| 50 g | Natriumperoxodisulfat, Massekonz. 7 % in Wasser |

Zulauf 3. Momeremulsion b)

| | |
|---|---|
| 116,67 g | Wasser |
| 8,75 g | Texapon NSO, Massekonz.: 28 % in Wasser |
| 0,7 g | Natronlauge, Massekonz.: 25 % in Wasser |
| 7,0 g | Acrylsäure |
| 3,5 g | Diallylphthalat |
| 63,00 g | Methylmethacrylat |
| 273,00 g | n-Butylacrylat |
| 7,00 g | Spülwasser |

Zulauf 4: Acrylsäure

| | |
|---|---|
| 7,00 g | Acrylsäure |
| 6,00 g | Wasser |

Beispiel

Die Durchführung entsprach dem vorherigen Beispiel.

Zulauf 1: Monomeremulsion a)

| | |
|---|---|
| 116,67 g | Wasser |
| 8,75 g | Texapon NSO, Massekonz.: 28 % in Wasser |
| 0,7 g | Natronlauge, Massekonz.: 25 % in Wasser |
| 14,0 g | Acrylsäure |
| 14,00 g | Diallylphthalat |
| 168,0 g | Styrol |
| 14,00 g | Uvinul 3033 P (2-(2H-Benzotriazol-2-yl)-4-methylphenol) |
| 168,00 g | n-Butylacrylat |
| 7,00 g | Spülwasser |

Zulauf 2: Initiatorlösung

50 g    Natriumperoxodisulfat, Massekonz. 7 % in Wasser

Zulauf 3. Momeremulsion b)

| | |
|---|---|
| 116,67 g | Wasser |
| 8,75 g | Texapon NSO, Massekonz.: 28 % in Wasser |
| 0,7 g | Natronlauge, Massekonz.: 25 % in Wasser |
| 7,0 g | Acrylsäure |
| 3,5 g | Diallylphthalat |
| 63,00 g | Methylmethacrylat |
| 273,00g | n-Butylacrylat. |
| 7,00 g | Spülwasser |

Zulauf 4: Acrylsäure

| | |
|---|---|
| 7,00 g | Acrylsäure |
| 6,00 g | Wasser |

Ergebnisse

Eigenschaften der erhaltenen Polymerdispersionen

| | Vergleichsbeispiel | Beispiel |
|---|---|---|
| Feststoffgehalt in Gew.% | 50,4 | 49,3 |
| Teilchengröße (mit hydrodynamischer Chromatographie, HDF bestimmt) | 381 | 393 |
| Polydispersität | 0,13 | 0,138 |
| PH Wert | 3,3 | 3,3 |
| Lichtdurchlässigkeit in % | 28 | 27 |
| Koagulatmenge in g | 2 | 2 |

Herstellung der Filme

Die Dispersionen aus dem Beispiel und Vergleichsbeispiel wurden auf eine Coronavorbehandelte Polypropylen (PP) Folie (temporärer Träger) gerakelt (Schichtdicke 60 $\mu$m, nass), getrocknet und eine Stunde bei 70 °C getempert. Danach wurde der Film mit der Folie auf einen gummielastischen, schwarz eingefärbten Untergrund bei Raumtemperatur mit einer Gummiwalze auflaminiert.

Herstellung des Untergrunds: Acronal® S360 D, eine Polyacrylatdispersion der BASF, wurde auf einen Feststoffgehalt von 45 Gew. % verdünnt und mit 2,5 Gew.teile Basacid Schwarz auf 100 Gew. Teile Polymer eingefärbt und daraus eine Film (Schichtdicke 450 $\mu$m nass) auf einem PP Untergrund hergestellt.

Das erhaltene Laminat wurde 30 Sekunden im Trockenschrank bei 140 °C getempert und nach dem Abkühlen die PP Folie abgezogen. Die Farbeigenschaften der erhaltenen Beschichtung des erfindungsgemäßen Films auf dem schwarzen Polyacrylatentergrund wurde optisch beurteilt und auch mit dem Farbmessgerät Datacolor MultFX 10 winkelabhängig bestimmt. In der nachfolgenden Tabelle ist L ein Maß für die Helligkeit, und a, b ein Maß für die Farbintensität:

+a = rot, -a = grün, +b = gelb, -b = blau, generelle gilt, dass ein hoher Absolutwert für a oder b (unabhängig vom Vorzeichen) eine hohe Farbintensität bedeutet

Optische Beurteilung:

Vergleich: homogener Film, Farbe rot, dehnbar über intensivgrün bis blau, reversibel Beispiel: wie Vergleich, jedoch deutlich intensivere und brilliantere Farben; bei 20 % Dehnung: intensiv grün; bei 40 % Dehnung: grün-blau; bei 60 % Dehnung: blau-violett

| Winkelpaar | L | | a | | b | |
|---|---|---|---|---|---|---|
| | Vergleich | Beispiel | Vergleich | Beispiel | Vergleich | Beispiel |
| 25°/170° | 38,83 | 47,68 | -11,02 | -11,13 | -4,99 | -5,08 |
| 25°/140° | 48,95 | 59,53 | -49,32 | -58,93 | 24,19 | 30,69 |
| 45°/150° | 51,61 | 59,15 | -43;87 | -45,78 | 34,36 | 36,55 |
| 45°/120° | 45,70 | 56,41 | 6,26 | 8,56 | 35,97 | 46,26 |
| 75°/120° | 37,57 | 42,82 | 30,55 | 34,61 | 20,43 | 23,24 |
| 75°/90° | 30,14 | 37,41 | 30,71 | 40,43 | 6,39 | 11,56 |
| 45°/110° | 27,82 | 35,53 | 12,94 | 17,79 | 17,75 | 27,57 |
| 45°/90° | 11,59 | 12,38 | 8,54 | 9,93 | -5,56 | -5,02 |
| 45°/60° | 8,74 | 7,99 | 1,19 | 0,46 | -7,08 | -8,61 |
| 45°/25 | 9,6 | 9,45 | 1,66 | -1,38 | -5,20 | -5,94 |

**Patentansprüche**

1. Verfahren zur Verbesserung der Farbbrillianz eines farbigen Polymersystems, welches aus einer Matrix und diskreten Polymerteilchen, welche gemäß einer definierten Raumgitterstruktur in der Matrix verteilt sind, besteht und durch Verfilmung eines Emulsionspolymerisats mit Kern/Schale Aufbau erhalten wird, wobei das Emulsionspolymerisat erhältlich ist durch Polymerisation von Monomeren in mindestens einer ersten Stufe (Monomere des Kerns) und anschließende Polymerisation von Monomeren in mindestens einer weiteren, zweiten Stufe (Monomere der Schale), wobei das Gewichtsverhältnis der Monomeren des Kerns zu den Monomeren der Schale 1 : 0,05 bis 1 : 20 beträgt und wobei die Glasübertragungstemperatur des Gemisches der Monomeren der Schale mindestens 10 °C tiefer ist als die Glasübertragungstemperatur des Gemisches der Monomeren des Kerns, **dadurch gekennzeichnet, dass** die Polymerisation der Monomeren des Kerns in Gegenwart eines Absorbers für elektromagnetische Wellen, insbesondere einen UV Absorber, erfolgt.

2. Verfahren gemäß Anspruch 1, **dadurch gekennzeichnet**, die Monomeren des Kerns zu mindestens 5 Gew. % aus Monomeren mit einer Glasübergangstemperatur kleiner 0 °C bestehen.

3. Verfahren gemäß einem der Ansprüche 1 oder 2, **dadurch gekennzeichnet, dass** die Monomeren der Schale zu 0,01 bis 10 Gew. % aus vernetzenden Monomeren bestehen.

4. Verfahren gemäß einem der Ansprüche 1 bis 3, **dadurch gekennzeichnet, dass** bei der Polymerisation der Monomeren des Kerns ionische Emulgatoren und bei der Polymerisation der Monomeren der Schale nichtionische Emulgatoren verwendet werden oder umgekehrt.

5. Verfahren gemäß einem der Ansprüche 1 bis 4, **dadurch gekennzeichnet, dass** die Monomeren der Schale bei der Polymerisation in weniger als 90 Minuten zudosiert werden.

6. Verfahren gemäß einem der Ansprüche 1 bis 5, **dadurch gekennzeichnet, dass** es sich bei den Polymerteilchen des farbigen Polymersystems um eine oder mehrere Teilchensorten mit einem mittleren Teilchendurchmesser im Bereich von 0,05 bis 5 $\mu$m handelt, wobei aber jede Teilchensorte einen Polydispersitätsindex (PI) kleiner 0,6 hat, berechnet nach der Formel

$$P.I. = (D_{90} - D_{10})/D_{50}$$

worin $D_{90}$, $D_{10}$ und $D_{50}$ Teilchendurchmesser bezeichnen, für die gilt:

$D_{90}$: 90 Gew.-% der Gesamtmasse aller Teilchen haben einen Teilchendurchmesser kleiner oder gleich $D_{90}$
$D_{50}$: 50 Gew.-% der Gesamtmasse aller Teilchen haben einen Teilchendurchmesser kleiner oder gleich $D_{50}$
$D_{10}$: 10 Gew.-% der Gesamtmasse aller Teilchen haben einen Teilchendurchmesser kleiner oder gleich $D_{10}$

7. Verfahren gemäß einem der Ansprüche 1 bis 6, **dadurch gekennzeichnet, dass** es sich bei den Polymerteilchen des farbigen Polymersystems um eine Teilchensorte handelt.

8. Verfahren gemäß einem der Ansprüche 1 bis 7, **dadurch gekennzeichnet, dass** das Emulsionspolymerisat insgesamt zu mindestens 40 Gew. % aus sogenannten Hauptmonomeren, ausgewählt aus $C_1$ bis $C_{20}$ Alkyl(meth) acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren aufgebaut ist.

9. Verfahren gemäß einem der Ansprüche 1 bis 8, **dadurch gekennzeichnet, dass** sich die Polymerteilchen des farbigen Polymersystems und die Matrix im Brechungsindex unterscheiden.

10. Verfahren gemäß Anspruch 9 **dadurch gekennzeichnet, dass** der Unterschied im Brechungsindex mindestens 0,01, insbesondere mindestens 0,1 beträgt.

11. Verfahren gemäß einem der Ansprüche 1 bis 10, **dadurch gekennzeichnet, dass** der Polydispersitätsindex der diskreten Polymerteilchen kleiner 0,45 ist.

**12.** Verfahren gemäß einem der Ansprüche 1 bis 11, **dadurch gekennzeichnet, dass** der Kern des Emulsionspolymerisats vernetzt ist.

**13.** Verfahren gemäß einem der Ansprüche 1 bis 12, **dadurch gekennzeichnet, dass** der Abstand zwischen den diskreten Polymerteilchen der farbigen Polymerschicht 20 bis 50 000 Nanometer beträgt.

**14.** Verfahren gemäß einem der Ansprüche 1 bis 13, **dadurch gekennzeichnet, dass** das Polymer der Matrix insgesamt zu mindestens 40 Gew. % aus sogenannten Hauptmonomeren, ausgewählt aus $C_1$ bis $C_{20}$ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren aufgebaut ist.

**15.** Farbiges Polymersystem, erhältlich nach einem Verfahren gemäß einem der Ansprüche 1 bis 14.

**16.** Verwendung eines farbigen Polymersystems gemäß Anspruch 15 als oder in Beschichtungsmitteln, z. B. zur Beschichtung von Kunststoffen, Kunststofffolien, faserigen Systemen, wie Textilien oder Papier, Verpackungen etc. oder in optischen Anzeigen mit sich ändernder Farbe der Polymerschicht oder zur Erhöhung der Lichtausbeute in optischen Anzeigen oder zur Herstellung von Farbpigmenten oder zur Herstellung von Formkörpern, welche z.B. durch Extrusion hergestellt werden können und für verschiedenste Zwecke, für die farbige Formkörper gewünscht sind, z. B. im Automobilbau oder Haushalt eingesetzt werden können

**17.** Verfahren zur Herstellung von mit einem farbigen Polymersystem gemäß Anspruch 15 beschichteten Substraten, **dadurch gekennzeichnet, dass** das Polymersystem auf einen temporären Träger aufgebracht wird, z. B. durch Verfilmung eines wässrigen Polymersystems oder durch Extrusion, und der erhaltene beschichtete Träger dann mit der beschichteten Seite auf das Substrat transferiert wird, z. B. laminiert oder gepresst wird, und gegebenenfalls der temporäre Träger anschließend abgezogen wird.

**Claims**

**1.** A process for improving the color brilliance of a color polymer system which is composed of a matrix and discrete polymer particles which are distributed in the matrix in accordance with a defined spatial lattice structure and is obtained by filming an emulsion polymer with core/shell structure, the emulsion polymer being obtainable by polymerization of monomers in at least one first stage (monomers of the core) and subsequent polymerization of monomers in at least one further, second stage (monomers of the shell), the weight ratio of the monomers of the core to the monomers of the shell being from 1:0.05 to 1:20 and the glass transition temperature of the mixture of the monomers of the shell being at least 10°C lower than the glass transition temperature of the mixture of the monomers of the core, which comprises polymerizing the monomers of the core in the presence of an absorber for electromagnetic waves, especially a UV absorber.

**2.** The process according to claim 1, wherein the monomers of the shell consist to an extent of at least 5% by weight of monomers having a glass transition temperature less than 0°C.

**3.** The process according to one of claims 1 and 2, wherein the monomers of the shell consist to an extent of from 0.01 to 10% by weight of crosslinking monomers.

**4.** The process according to any of claims 1 to 3, wherein ionic emulsifiers are used in the polymerization of the monomers of the core and nonionic emulsifiers are used in the polymerization of the monomers of the shell, or vice versa.

**5.** The process according to any of claims 1 to 4, wherein the monomers of the shell are metered into the polymerization within less than 90 minutes.

**6.** The process according to any of claims 1 to 5, wherein the polymer particles of the color polymer system are one or more different particle types having a mean particle diameter in the range from 0.05 to 5 $\mu$m, but each particle

type having a polydispersity index (PI) less than 0.6, calculated by the formula

$$P.I. = (D_{90} - D_{10})/D_{50}$$

in which $D_{90}$, $D_{10}$ and $D_{50}$ designate particle diameters for which:

$D_{90}$: 90% by weight of the total mass of all particles have a particle diameter less than or equal to $D_{90}$
$D_{50}$: 50% by weight of the total mass of all particles have a particle diameter less than or equal to $D_{50}$
$D_{10}$: 10% by weight of the total mass of all particles have a particle diameter less than or equal to $D_{10}$.

7. The process according to any of claims 1 to 6, wherein the polymer particles of the color polymer system are one particle type.

8. The process according to any of claims 1 to 7, wherein the emulsion polymer is composed overall to an extent of at least 40% by weight of so-called main monomers selected from $C_1$ to $C_{20}$ alkyl (meth)acrylates, vinyl esters of carboxylic acids comprising up to 20 carbon atoms, vinylaromatics having up to 20 carbon atoms, ethylenically unsaturated nitriles, vinyl halides, vinyl ethers of alcohol comprising from 1 to 10 carbon atoms, aliphatic hydrocarbons having from 2 to 8 carbon atoms and one or two double bonds, or mixtures of these monomers.

9. The process according to any of claims 1 to 8, wherein the polymer particles of the color polymer system and the matrix differ in the refractive index.

10. The process according to claim 9, wherein the difference in the refractive index is at least 0.01, in particular at least 0.1.

11. The process according to any of claims 1 to 10, wherein the polydispersity index of the discrete polymer particles is less than 0.45.

12. The process according to any of claims 1 to 11, wherein the core of the emulsion polymer has been crosslinked.

13. The process according to any of claims 1 to 12, wherein the distance between the discrete polymer particles of the color polymer layer is from 20 to 50 000 nanometers.

14. The process according to any of claims 1 to 13, wherein the polymer of the matrix is composed overall to an extent of at least 40% by weight of so-called main monomers selected from $C_1$ to $C_{20}$ alkyl (meth)acrylates, vinyl esters of carboxylic acids comprising up to 20 carbon atoms, vinylaromatics having up to 20 carbon atoms, ethylenically unsaturated nitriles, vinyl halides, vinyl ethers of alcohols comprising from 1 to 10 carbon atoms, aliphatic hydrocarbons having from 2 to 8 carbon atoms and one or two double bonds, or mixtures of these monomers.

15. A color polymer system obtainable by the process according to any of claims 1 to 14.

16. The use of a color polymer system according to claim 15 as or in coating compositions, for example for coating plastics, plastics films, fibrous systems such as textiles or paper, packaging, etc., or in visual displays with changing color of the polymer layer or for increasing the light yield in visual displays or for producing color pigments or for producing moldings which can be produced, for example, by extrusion and can be used for a wide variety of purposes for which color moldings are desired, for example in automobile construction or the household.

17. A process for producing substrates coated with a color polymer system according to claim 15, which comprises applying the polymer system to a temporary carrier, for example by filming an aqueous polymer system or by extrusion, and then transferring, for example laminating or pressing, the resulting coated carrier by the coated side to the substrate, and, if appropriate, subsequently removing the temporary carrier.

**Revendications**

1. Procédé pour l'amélioration de la brillance de couleur d'un système polymère coloré qui consiste en une matrice et des particules de polymère distinctes, qui sont réparties selon une structure réticulaire spatiale définie dans la matrice, et est obtenu par mise sous forme d'un film d'un produit de polymérisation en émulsion, à structure noyau/enveloppe, le produit de polymérisation en émulsion pouvant être obtenu par polymérisation de monomères dans au moins une première étape (monomères du noyau) et polymérisation subséquente de monomères dans au moins une autre, deuxième étape (monomères de l'enveloppe), le rapport pondéral des monomères du noyau aux monomères de l'enveloppe valant de 1:0,05 à 1:20 et la température de transition vitreuse du mélange de monomères de l'enveloppe étant inférieure d'au moins 10 °C à la température de transition vitreuse du mélange de monomères du noyau, **caractérisé en ce que** la polymérisation des monomères du noyau s'effectue en présence d'un absorbeur d'ondes électromagnétiques, en particulier d'un absorbeur UV.

2. Procédé selon la revendication 1, **caractérisé en ce que** les monomères du noyau consistent à raison d'au moins 5% en poids en monomères ayant une température de transition vitreuse inférieure à 0 °C.

3. Procédé selon la revendication 1 ou 2, **caractérisé en ce que** les monomères de l'enveloppe consistent à raison de 0,01 à 10 % en poids en monomères réticulables.

4. Procédé selon l'une quelconque des revendications 1 à 3, **caractérisé en ce que** dans la polymérisation des monomères du noyau on utilise des émulsifiants ioniques et dans la polymérisation des monomères de l'enveloppe on utilise des émulsifiants non ioniques ou vice versa.

5. Procédé selon l'une quelconque des revendications 1 à 4, **caractérisé en ce que** les monomères de l'enveloppe sont ajoutés par addition dosée en moins de 90 minutes lors de la polymérisation.

6. Procédé selon l'une quelconque des revendications 1 à 5, **caractérisé en ce que** les particules de polymère du système de polymère coloré consistent en une ou plusieurs sortes de particules ayant un diamètre moyen de particule dans la plage de 0,05 à 5 $\mu$m, mais chaque sorte de particule ayant un indice de polydispersité (PI) inférieur à 0,6, calculé selon la formule

$$\text{P.I.} = (D_{90} - D_{10})/D_{50}$$

dans laquelle $D_{90}$, $D_{10}$ et $D_{50}$ désignent les diamètres de particules pour lesquels on a :

$D_{90}$ : 90 % en poids de la masse totale de toutes les particules ont un diamètre inférieur ou égal à $D_{90}$
$D_{50}$ : 50 % en poids de la masse totale de toutes les particules ont un diamètre inférieur ou égal à $D_{50}$
$D_{10}$ : 10 % en poids de la masse totale de toutes les particules ont un diamètre inférieur ou égal à $D_{10}$.

7. Procédé selon l'une quelconque des revendications 1 à 6, **caractérisé en ce que** les particules de polymère du système de polymère coloré consistent en une seule sorte de particules.

8. Procédé selon l'une quelconque des revendications 1 à 7, **caractérisé en ce que** le produit de polymérisation en émulsion est constitué au total à raison d'au moins 40 % en poids de monomères dits principaux, choisis parmi des (méth)acrylates d'alkyle en $C_1$-$C_{20}$, des esters vinyliques d'acides carboxyliques contenant jusqu'à 20 atomes de carbone, des composés vinylaromatiques ayant jusqu'à 20 atomes de carbone, des nitriles à insaturation éthylénique, des halogénures de vinyle, des éthers vinyliques d'alcools contenant de 1 à 10 atomes de carbone, des hydrocarbures aliphatiques ayant de 2 à 8 atomes de carbone et comportant une ou deux doubles liaisons, ou des mélanges de ces monomères.

9. Procédé selon l'une quelconque des revendications 1 à 8, **caractérisé en ce que** les particules de polymère du système polymère coloré et la matrice diffèrent quant à l'indice de réfraction.

10. Procédé selon la revendication 9, **caractérisé en ce que** la différence d'indice de réfraction est d'au moins 0,01, en particulier d'au moins 0,1.

11. Procédé selon l'une quelconque des revendications 1 à 10, **caractérisé en ce que** l'indice de polydispersité des particules de polymères distinctes est inférieur à 0,45.

12. Procédé selon l'une quelconque des revendications 1 à 11, **caractérisé en ce que** le noyau du produit de polymérisation en émulsion est réticulé.

13. Procédé selon l'une quelconque des revendications 1 à 12, **caractérisé en ce que** la distance entre les particules de polymère distinctes de la couche de polymère coloré vaut de 20 à 50 000 nanomètres.

14. Procédé selon l'une quelconque des revendications 1 à 13, **caractérisé en ce que** le polymère de la matrice est constitué au total à raison d'au moins 40 % en poids de monomères dits principaux, choisis parmi des (méthacrylates d'alkyle en $C_1$-$C_{20}$, des esters vinyliques d'acides carboxyliques contenant jusqu'à 20 atomes de carbone, des composés vinylaromatiques ayant jusqu'à 20 atomes de carbone, des nitriles à insaturation éthylénique, des halogénures de vinyle, des éthers vinyliques d'alcools contenant de 1 à 10 atomes de carbone, des hydrocarbures aliphatiques ayant de 2 à 8 atomes de carbone et comportant une ou deux doubles liaisons, ou des mélanges de ces monomères.

15. Système polymère coloré, pouvant être obtenu conformément à un procédé selon l'une quelconque des revendications 1 à 14.

16. Utilisation d'un système de polymère coloré selon la revendication 15 en tant que ou dans des produits de revêtement, par exemple pour le revêtement de matières plastiques, des films de matière plastique, des systèmes fibreux, tels que des textiles ou le papier, des emballages, etc. ou dans des afficheurs optiques à couleur changeante de la couche de polymère, ou pour l'augmentation du rendement lumineux dans des afficheurs optiques ou pour la production de pigments colorés ou pour la production de corps moulés, qui peuvent être produits par exemple par extrusion, et peuvent être utilisés à des fins les plus diverses pour lesquelles des corps moulés colorés sont souhaitables, par exemple dans la construction d'automobiles ou des articles ménagers.

17. Procédé pour la production de substrats revêtus avec un système de polymère coloré selon la revendication 15, **caractérisé en ce que** le système polymère est appliqué sur un support temporaire, par exemple par mise sous forme d'un film d'un système aqueux de polymère ou par extrusion, et le support revêtu obtenu est ensuite transféré, par exemple est laminé ou pressé, avec la face revêtue sur le substrat, et éventuellement le support temporaire est ensuite retiré.

**IN DER BESCHREIBUNG AUFGEFÜHRTE DOKUMENTE**

**In der Beschreibung aufgeführte Patentdokumente**

- DE 19717879
- DE 19820302
- DE 19834194
- DE 10321083 A
- DE 10229732
- DE 19820302 A
- DE 19834194 A
- DE 99717879 A
- DE 10321084 A
- DE 10321079 A
- EP 955323 A
- DE 10228228 A

**In der Beschreibung aufgeführte Nicht-Patentliteratur**

- **Houben-Weyl.** Methoden der organischen Chemie, Band XIV/1, Makromolekulare Stoffe. Georg-Thieme-Verlag, 1961, vol. XIV/1, 411-420
- **W. Mächtle.** *Makromolekulare Chemie,* 1984, vol. 185, 1025-1039